# FASCICULE DE BREVET EUROPEEN

(11) **EP 1 742 988 B1**
(45) Date de publication et mention de la délivrance du brevet: **29.08.2007**
(21) Numéro de dépôt: 05739574.1
(22) Date de dépôt: 10.03.2005
(51) Int. Cl.: C08G 77/26, C07H 15/10, C08G 77/388

(54) **POLYMERE GREFFE COMPRENANT UN SQUELETTE POLYORGANOSILOXANE ET DES MOTIFS GLYCOSIDE**
PFROPFPOLYMER MIT POLYORGANOSILOXAN-HAUPTKETTE UND GLYKOSIDEINHEITEN
GRAFTED POLYMER COMPRISING A POLYORGANOSILOXANE BACKBONE AND GYLCOSIDE UNITS

(30) Priorité: 10.03.2004 FR 0402497
(43) Date de publication de la demande: 17.01.2007
(73) Titulaire: RHODIA CHIMIE, 92512 Boulogne Billancourt Cedex (FR)
(72) Inventeur: FLEURY, Etienne, F-69540 IRIGNY (FR)
(74) Mandataire: Boittiaux, Vincent
(86) Numéro de dépôt international: PCT/FR2005/000577
(87) Numéro de publication internationale: WO 2005/087843

(56) Documents cités:
- AT-B- 393 509
- WAYNE SPEVAK & AL: "An Efficient Synthesis of N-Allylglycosamides from Unprotected Carbohydrates" J.ORG.CHEM, vol. 61, 1996, pages 3417-3422, XP002304969 cité dans la demande
- TOMOKO AKIMOTO & AL: "Preparation of oligodimethylsiloxanes with sugar moiety at a terminal group as a transdermal penetration enhancer" MACROMOL. CHEM. PHYS., vol. 201, 2000, pages 2729-2734, XP002304970 WEINHEIM-GERMANY cité dans la demande

## Description

La présente invention a pour objet un polymère greffé, comprenant un squelette polyorganosiloxane et des motifs glycoside. L'invention a également pour objet un procédé de préparation du polymère, et son utilisation. L'invention a également pour objet un composé intermédiaire dérivé d'un glycoside, utile pour greffer un polyorganosiloxane.

Les glycosides sont des composés présentant un intérêt particulier pour leurs propriétés physico-chimiques. Il s'agit de plus de composés d'origine naturelle, d'une certaine complexité chimique, dont l'accès peut-être aisé. Cette origine peut les rendre particulièrement attractifs d'un point de vue environnemental et/ou toxicologique et/ou commercial. De nombreux produits dérivant de glycosides ont donc été étudiés. Il est ainsi connu de fonctionnaliser des glycosides pour en moduler les propriétés.

Il a par exemple été proposé de fonctionnaliser des glycosides afin de pouvoir ensuite les greffer sur des polyorganosiloxane, afin d'obtenir des polyorganosiloxanes à propriétés modifiées.

On connaît ainsi des fonctionnalisations d'un alcool sur le carbone anomère d'un glycoside, en présence d'un acide, en conditions homogènes. Cette réaction est connue comme «réaction de Fischer». Ces fonctionnalisations ne permettent pas d'obtenir des produits de grande pureté. Il y a en particulier une réaction parasite, la réaction de Maïer, créant des insaturations dans le produit obtenu. De telles insaturations parasites peuvent poser des problèmes lors de l'utilisation du glycoside fonctionnalisé en tant que réactif dans d'autres réactions, notamment lors d'un greffage sur un polymère. Les insaturations parasites peuvent par exemple causer des réticulations non souhaitées. Ces réactions parasites peuvent nécessiter des étapes de purification dont le coût peut s'avérer élevé.

On connaît notamment des procédés de greffage de polyorganodisiloxanes par des glycosides fonctionnalisés sur le carbone anomère à l'aide de composés comprenant un groupe alcool et un groupe allyle. De tels procédés sont par exemple décrits dans les documents suivants:
- Carbohydrate modified polysiloxanes II, G. Jonas et al., Acta Polymer, 45, 14-20 (1994),
- Preparation of oligomethylsiloxanes with sugar moiety at a terminal group as transdermal penetration enhancer, Akimoto et al., Macromol. Chem. Phys. 2000, 201, 2729-2734,
- Silicon-Modified Carbohydrate Surfactants I, R. Wagner, Applied organometallic chemistry, vol. 10, 421-435 (1996),
- demande de brevet publiée EP 612759.

De tels procédés mènent à des composés comprenant des motifs organosiloxane et des motifs glycoside greffés, les motifs organosiloxane et les motifs glycoside étant liés par l'intermédiaire d'une rotule comprenant un groupe -O-. Ces procédés sont toutefois trop complexes pour en envisager sérieusement une exploitation industrielle, et/ou trop onéreux pour envisager sérieusement des utilisations dans lesquelles des propriétés qu'ils pourraient apporter en compenseraient le coût.

On connaît par ailleurs un procédé de fonctionnalisation de glycosides par l'allylamine. Un tel procédé est par exemple décrit dans les documents suivants :
- An Efficient Synthesis of N-Allylglycosylamides form Unprotected carbohydrates, J. Org. Chem. 1996, 61, 3417-3422.
- Chemoenzymatic synthesis of neoglycopeptides : Application to an alpha-Gal-Terminated Neoglycopeptide, J. Org. Chem. 2001, 66, 2948-2956.

La présente invention a pour objet de proposer un nouveau procédé de préparation de polymères greffés comprenant un squelette polyorganosiloxane et des motifs glycoside. Ce procédé est en particulier suffisamment simple pour en envisager une exploitation industrielle, et/ou pour envisager sérieusement des utilisations dans lesquelles des propriétés que pourraient apporter les polymères greffés en compenseraient le coût. Ainsi l'invention a également pour objet de nouveaux polymères pouvant être obtenus par le procédé. Enfin, l'invention a également pour objet un produit intermédiaire utile pour la mise en oeuvre du procédé.

L'invention propose ainsi un polymère greffé, ayant l'une des formules suivantes: 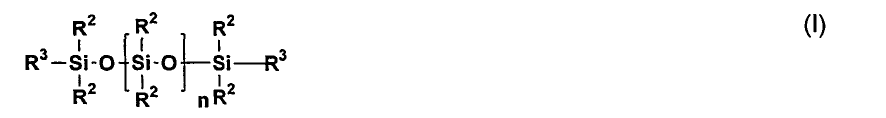 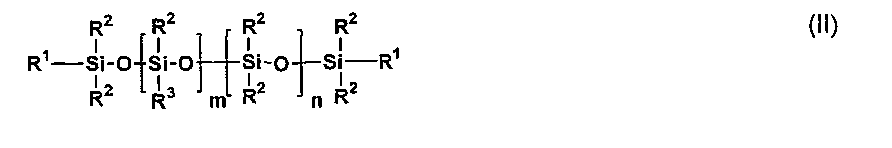 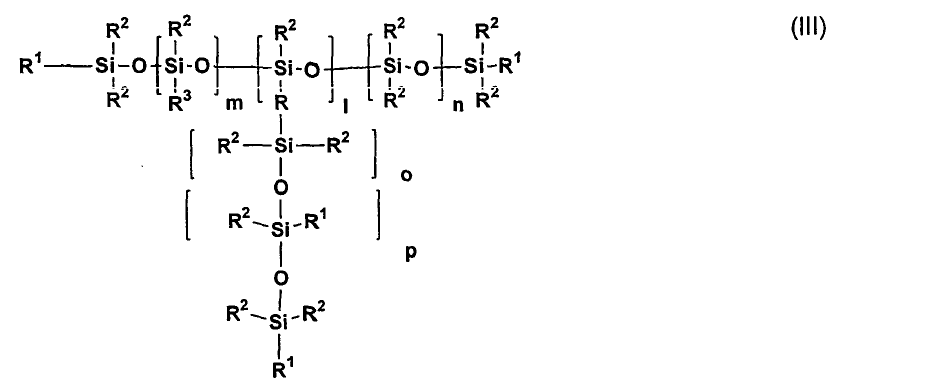 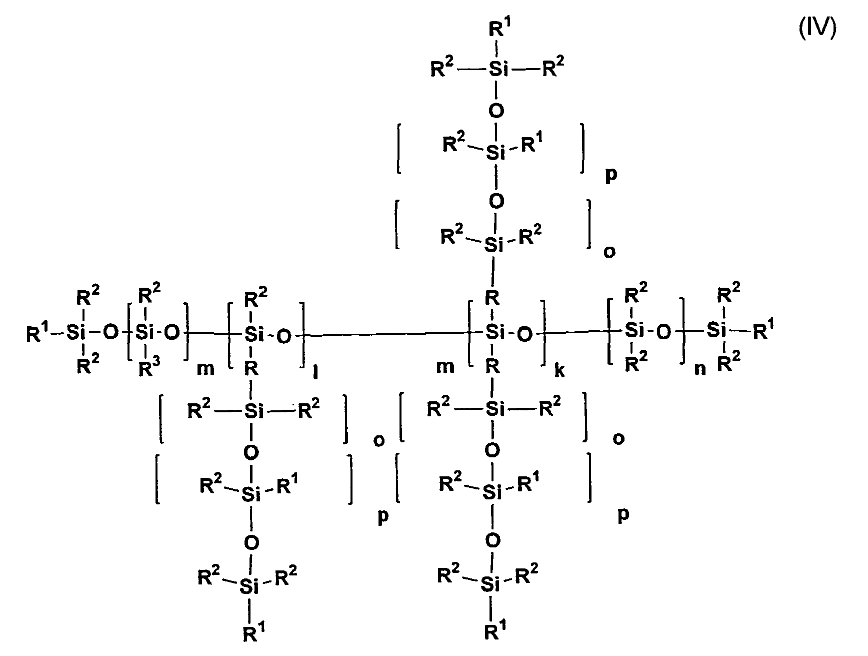 dans lesquelles:
- R², identique ou différent, est un groupe hydrogénocarboné, de préférence un groupe méthyle,
- R³, identique ou différent, est un groupe de formule -L-G dans laquelle:
   - L est un groupe de liaison divalent comprenant un atome d'azote,
   - G est un glycoside comprenant des groupes -OH,
- R¹, identique ou différent, est un groupe R² ou R³,
- R est un groupe divalent comprenant un atome d'oxygène, de préférence un groupe -O-,
- n est un nombre moyen différent de 0,
- m est un nombre moyen supérieur ou égal à 0,
- k et l sont des nombres moyens supérieurs ou égaux à 0, et
- o et p, identiques ou différents, sont des nombres moyens supérieurs ou égaux à 0.

Le polymère peut notamment être:
- un composé de type G-MDₙM-G de formule (I) où n est compris entre 2 et 100, par exemple égal à 10, 13, ou 29, et R² est un groupe méthyle,
- un composé de type M(D-G)M de formule (II) où m=1, n=0, R² est un groupe méthyle et R¹ est un groupe méthyle.

L'invention propose également un procédé de préparation du polymère greffé, comprenant les étapes suivantes:
a) préparer un composé greffon de formule L'-G', dans laquelle:
   - L' est un groupe comprenant un groupe ethylèniquement insaturé, et comprenant un atome d'azote, et
   - G' est un glycoside comprenant des groupes -OH éventuellement protégés,
b) greffer le composé greffon par un procédé comprenant une étape d'hydrosilylation, et
c) éventuellement déprotéger les groupes -OH.

L'invention propose également un composé (composé greffon) utile dans la préparation du polymère greffé, de formule suivante:

G"-N(COCH₃)-CH₂-CH=CH₂

dans laquelle G" est un glycoside lié à l'atome N par un carbone anomère, les groupes -OH du glycosides étant partiellement protégés par des groupes acétyl -COCH₃₋

### Définitions

### Glycoside

Dans la présente demande, le terme glycoside se réfère à tout groupe comprenant un ou plusieurs motifs glycoside, et aux dérivés de ces groupes. Dans le cas où le glycoside comprend plusieurs motifs glycosides, on parle également de polyglycosides. Par polyglycoside, on entend un glycoside comprenant au moins deux motifs glycoside.

Les motifs glycoside, les glycosides, les polyglycosides, leurs dérivés, leurs structures et formules, sont connus de l'homme du métier. On précise pour les motifs glycoside qu'il peut notamment s'agir d'aldoses, de cetoses, ou de dérivés, en cycles à 5 atomes (pentoses) ou 6 atomes (hexoses). Il est en outre connu de l'homme du métier que les glycosides, les polyglycosides, et leurs dérivés présentent un «carbone anomère» à une extrémité, la droite selon la convention d'écriture, Il est également connu que les motifs glycoside, les glycosides, les polyglycosides, et leurs dérivés présentent des groupes -OH (si ces derniers ne sont pas protégés).

Les glycosides incluent notamment:
- les methylglycosides, les glycosides comprenant un groupe -COOH,
- les monoglycosides et les polyglycosides,

A titre d'exemples de glycosides monosaccharides, on cite les glycosides suivants: D-glucose, fructose, sorbose, mannose, galactose, talose, allose, gulose, idose, glucosamine, mannoamine, galactosamine, acide glucuronique, rhamnose, arabinose , acide galacturonique, fucose, xylose, lyxose, ribose, palatinose,

A titre d'exemples de glycosides di- ou oligo- saccharides, on cite les glycosides suivants:
- di-saccharides: maltose, gentiobiose, lactose, cellobiose,, isomaltose, melibiose, laminaribiose, chitobiose, xylobiose, mannobiose, sophorose,
- oligo-sacchacaride: maltotriose, isomaltotriose, maltotetraose, maltopentaose, xyloglucane, maltoheptaose, mannotriose, manninotriose, maltodextrines, chitotriose, de manière générale les di- ou oligo- saccharides présentant des liaisons β-1-4, les amidons ayant au moins 5 équivalents dextroses.

On cite également à titre d'exemples de glycosides:
- les dérivés de l'amidon, notamment le maltose, les maltodextrines,
- les galactomannanes et leurs dérivés, par exemples les polymères guars et leurs dérivés, obtenus à par hydrolyse de guar naturel, et éventuellement modification chimique (dérivatisation). Le guar naturel est extrait de l'albumen de certaines graines de plantes, par exemple *Cyamopsis Tetragonalobus.* La macromolécule de guar est constituée par une chaîne principale linéaire construite à partir de sucres monomères β-D-mannoses liés entre eux par des liaisons (1-4), et des unités latérales α-D-galactoses liées aux β-D-mannoses par des liaisons (1-6).

Les polyglycosides, comprenant plusieurs motifs glycoside, peuvent être décrits comme des enchaînements de glycosides (mono- et/ou polyglycosides). Dans la présente demande, on décrit un enchaînement de glycosides par la formule G^{a}-G^{b}-, dans laquelle G^{a} est un glycoside ou un polyglycoside, et G^{b} est un glycoside ou un polyglycoside. Dans le cas où G^{a} ou G^{b} est un polyglycoside, ce dernier peut également être décrit par une formule G^{a'}-G^{b'}-, dans laquelle G^{a'} est un glycoside ou un polyglycoside, et G^{b'} est un glycoside ou un polyglycoside, et ainsi de suite... Des glycosides ou polyglycosides pouvant constituer des groupes G^{a}, G^{b}, Ga', Gb', etc., ont été mentionnés ci-dessus.

### Glycoside protégé

Par glycoside protégé, on entend un glycoside dont au moins une partie des groupes -OH a été modifiée en groupes de formule -OP, où P est un groupe protecteur, par exemple un groupe trimethylsilyl (TMS, -Si(CH₃)₃), ou un groupe acétyl -COCH₃.

Le groupe protecteur peut avoir pour fonction d'éviter des réactions secondaires non désirées sur les groupes -OH du glycoside, par exemple des réactions menant à des réticulations lors de la réaction avec le composé squelette.

Le groupe protecteur peut également aider à moduler la solubilité du glycoside.

La protection est dite complète si tous les groupes -OH d'un glycoside sont substitués par le groupe -OP.

La protection est dite partielle si une partie seulement des groupes -OH d'un glycoside est substituée par le groupe -OP.

On détaille ci-dessous le procédé selon l'invention.

### Préparation du composé greffon

Lors d'une première étape a) du procédé, on prépare un composé greffon de formule L'-G', dans laquelle:
- L' est un groupe comprenant un groupe ethylèniquement insaturé, et comprenant un atome d'azote, et
- G' est un glycoside comprenant des groupes -OH éventuellement protégés, par un glycoside G mentionné dans cette demande plus loin.
Le groupe L' a de préférence l'une des formules suivantes:

-NR⁴-(CH₂)_{q'}-CH=CH₂,

-NR⁴-(CH₂)_{q'}-C≡CH,

dans lesquelles:
- R⁴ est un atome d'hydrogène, un groupe alkyl ou un groupe protecteur, par exemple un groupe protecteur acétyl -COCH₃, et
- q' est un nombre entier supérieur ou égal à 0.
Le groupe L' est ainsi de préférence un groupe dérivé de l'allylamine, avec de préférence un groupe protecteur acétyl lié à l'atome d'azote.

Ainsi le composé greffon peut être un composé de formule G'-N(COCH₃)-CH₂-CH=CH₂, dans lequel G' est un glycoside éventuellement protégé. Les groupes protecteurs peuvent être choisis par les groupes triméthylsylil (-TMS, -Si(CH₃)₃), ou acétyl (-COCH₃).

Selon un mode de réalisation intéressant, G' a la formule G^{a}-G^{b}- dans laquelle G^{a} est un glycoside (mono- ou polyglycoside) et G^{b} est un glycoside de liaison lié à l'atome N par un carbone anomère. G' peut par exemple être est un groupe cellobiose, ou un groupe G^{a}-G^{b}- dans lequel G^{b} est un groupe cellobiose.

Le composé greffon peut être préparé par réaction du carbone anomère d'un glycoside G" avec un réactif de fonctionnalisation comprenant un groupe amine, de préférence un groupe amine primaire, et un groupe comprenant une insaturation (par exemple type alcène ou alcyne). Le glycoside G" comprend des groupes -OH libres. Le réactif de fonctionnalisation est de préférence l'allylamine.

La réaction peut être réalisées en absence de solvant, à température ambiante, mais d'autres modalités de réaction ne sont pas exclues.

Ainsi l'étape a) de préparation d'un composé greffon peut comprendre les étapes suivantes:
a1) réaction du carbone anomère d'un glycoside G" comprenant des groupes -OH libres avec de l'allylamine en excès,
a2) élimination de l'allylamine en excès,
a3) réaction avec de l'anhydride acétique, de manière à protéger l'atome d'azote, et éventuellement des groupes -OH primaires du glycoside, et
a4) éventuellement protection des autres groupes -OH du glycoside.

On donne ci-dessous un exemple de préparation d'un composé greffon dont le glycoside G" est le cellobiose, par réaction avec un composé de fonctionnalisation allylamine. L'exemple ci-dessous comprend les étapes a1) à a3), dans lequel -P représente un groupe acétyle:

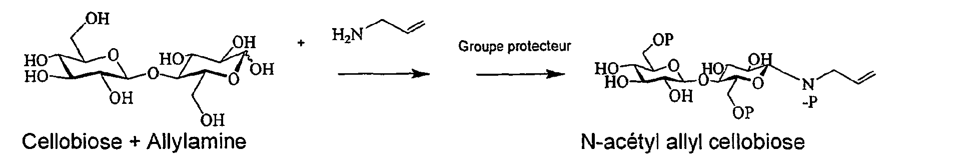

Selon un mode de réalisation particulièrement avantageux de l'invention, l'étape a3) de réaction avec l'anhydride acétique, est réalisée dans des conditions telles qu'au moins une partie des groupes -OH du glycoside sont acétylés, en plus de l'atome d'azote. L'acétylation est par exemple menée à température ambiante en présence d'anhydride acétique pendant plusieurs heures. Les fonctions hydroxyles en C₆ sont éventuellement modifiées s'il y a un excès de réactif. Dans ce mode de réalisation, les groupes -OH primaires sont acétylés en priorité. Il n'est pas exclu que tous les groupes -OH soient acétylés. Ce mode de réalisation peut permettre notamment d'éviter de mettre en oeuvre une étape de protection spécifique. Il est intéressant en ce qui concerne la simplicité du procédé, et en ce qui concerne le contrôle de la solubilité du composé greffon.

Ainsi, selon un mode de réalisation avantageux le composé greffon est un groupe de formule:

G"-N(COCH₃)-CH₂-CH=CH₂

dans laquelle G" est un glycoside lié à l'atome N par un carbone anomère, les groupes -OH des glycosides étant au moins partiellement protégés par des groupes acétyl -COCH₃. Selon un mode de réalisation intéressant, G" est un groupe cellobiose, ou un groupe G^{a}-G^{b}- dans lequel G^{b} est un groupe cellobiose, et G^{a} est un glycoside.

### Protections éventuelles

La préparation du composé greffon peut comprendre une protection. Selon un mode de réalisation, la protection peut être effectuée lors d'une étape spécifique de protection a4). L'étape spécifique de protection peut être une protection partielle ou totale du groupe G' par des groupes acétyl, par exemple à l'aide d'anhydride acétique, dans un solvant tel que la pyridine ou d'acide acétique en présence d'un acide fort du type H₂SO₄. L'étape spécifique de protection peut être une protection partielle ou totale du groupe G' par des groupes triméthylsylil, par exemple à l'aide de trimethylchlorosilane, dans un milieu de type imidazole/toluène, ou de préférence dans un milieu pyridine.

On donne ci-dessous un exemple d'étape de protection a4) par des groupes acétyl:

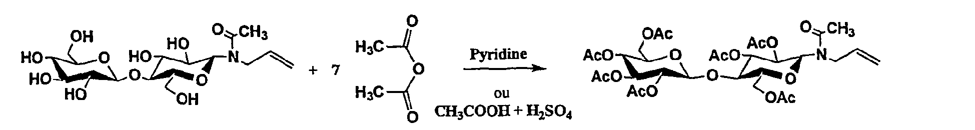

On donne ci-dessous un exemple d'étape de protection a4) par des groupes TMS:

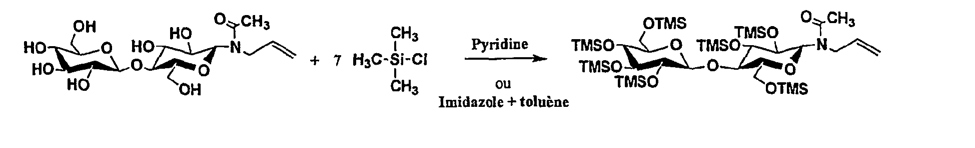

### Greffage

Le greffage est mis en oeuvre lors d'une étape b) par un procédé comprenant une étape d'hydrosilylation.
Selon un premier mode de réalisation, l'étape b) est un greffage sur un composé squelette, par une réaction d'hydrosilylation simple.
Selon un deuxième mode de réalisation, l'étape b) comprend une réaction de greffage sur un composé squelette par hydrosilylation, et une réaction de redistribution. Les réactions de redistribution sont connues de l'homme du métier.
Selon un troisième mode de réalisation, l'étape b) comprend une hydrosilylation du composé greffon avec un silane squelette présentant la formule H-Si(OR⁵)₃₋ₐR⁵ₐ, dans laquelle R⁵, identique ou différent, est un groupe hydrogénocarboné, et a est égal à 1 ou 2, le silane squelette présentant de préférence la formule H-Si(-O-CH₂-CH₃)₂CH₃, puis une redistribution en présence d'un polyorganosiloxane. De telles redistributions de silanes fonctionnalisés sont connues de l'homme du métier.

Ainsi, l'étape b) peut être décrite de la manière suivante: greffer le composé greffon par un procédé comprenant une étape d'hydrosilylation, ledit procédé comprenant:
- une hydrosilylation du composé greffon avec un composé squelette présentant l'une des formules suivantes: 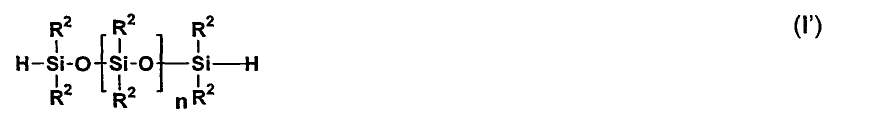 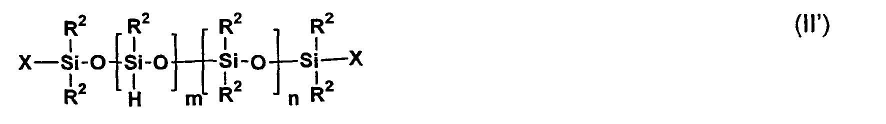 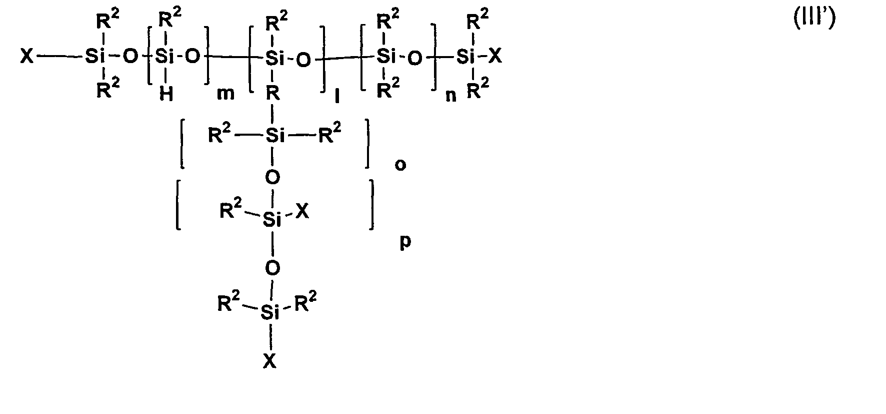 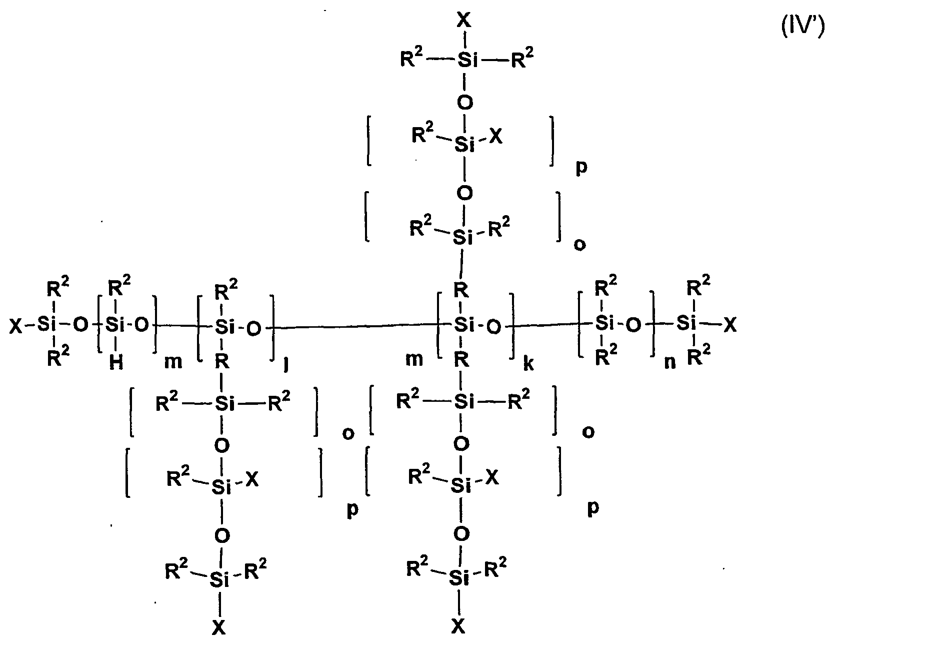 dans lesquelles:
   - R² identique ou différent, est un groupe hydrogénocarboné, de préférence un groupe méthyle,
   - X, identique ou différent, est un atome d'hydrogène ou un R²,
   - R est un groupe divalent comprenant un atome d'oxygène, de préférence un groupe -O-,
   - n est un nombre moyen différent de 0,
   - m est un nombre moyen supérieur ou égal à 0,
   - k et l sont des nombres moyens supérieurs ou égaux à 0, et
   - o et p, identiques ou différents, sont des nombres moyens supérieurs ou égaux à 0,
   la réaction étant réalisée dans un solvant solubilisant ou gonflant le greffon et le squelette,
   puis éventuellement une redistribution, ou
- une hydrosilylation du composé greffon avec un silane squelette présentant la formule H-Si(OR⁵)₃₋ₐR⁵ₐ, dans laquelle R⁵, identique ou différent, est un groupe hydrogénocarboné, et a est égal à 1 ou 2, le silane squelette présentant de préférence la formule H-Si(-O-CH₂-CH₃)₂CH₃, la réaction étant réalisée dans un solvant solubilisant ou gonflant le greffon et le squelette, puis une redistribution en présence polyorganosiloxane.

Le composé squelette peut notamment être:
- un composé de type M'DₙM' de formule (l') où n est compris entre 2 et 100, par exemple égal à 10, 13, ou 29, et R² est un groupe méthyle,
- un composé de type MD'M de formule (II') où m=1, n=0, et R² est un groupe méthyle.

### Réaction d'hydrosilylation

Au cours de cette phase, on fait réagir le composé greffon avec un composé squelette.

Le composé squelette est un polyhydrogénosiloxane ou un hydrogénosilane. De tels composés comprennent un nombre variable d'atomes d'hydrogène, aux extrémités des chaînes macromoléculaires, et/ou au sein des chaînes macromoléculaires, ou un atome d'hydrogène lié à l'atome de silicium d'un silane.

De tels composés hydrogénés sont connus de l'homme du métier et sont disponibles dans le commerce. Dans la présente demande, outre les formules mentionnées ci-dessus, on pourra se référer également aux terminologies connues de l'homme du métier pour des groupes M, D, T, Q et des groupes M', D' correspondants, comprenant un atome d'hydrogène lié à un atome de silicium, ou un greffon. La réaction d'hydrosilylation est également connue de l'homme du métier. De nombreux ouvrages existent à ce sujet. Elle consiste à faire réagir un atome d'hydrogène lié à un atome de silicium, avec un groupe comprenant une insaturation. La réaction d'hydrosilylation est en générale mise en oeuvre à l'aide d'un catalyseur, par exemple un catalyseur à base de platine, tel que le catalyseur de Karstedt décrit dans le brevet US3775452.

L'opération d'hydrosilylation est de préférence réalisée:
- à une température de 50 à 150 °C, de préférence de 50 à 100 °C, tout particulièrement de 60 à 90°C,
- en présence d'un solvant (S), inerte vis-à-vis des réactifs, présentant à pression atmosphérique un point d'ébullition inférieur à 250 °C, de préférence inférieur à 150°C.

L'opération d'hydrosilylation est réalisée en présence d'un catalyseur d'hydrosilylation ; celui-ci est notamment choisi parmi ceux à base de platine (0) ou d'un dérivé du platine (0), tels que les complexes de platine décrits dans US-A-3,159,601 , US-A-3,159,662 , US-A-3,715,334 , US-A-3,814,730 ... Un catalyseur préférentiel est le catalyseur de KARSTEDT, mis en oeuvre par exemple à raison de 1 à 300 parties, de préférence de 5 à 100 parties en masse de platine par million de parties en masse de réactifs (SiH) et (Vi) mis en oeuvre.

L'opération d'hydrosilylation est de préférence réalisée sous pression atmosphérique.

L'introduction des réactifs (composé squelette et composé greffon) est de préférence réalisée par coulée simultanée des deux réactifs en continu sur la masse réactionnelle comprenant le solvant et le catalyseur.

Le solvant (S) et les réactifs non réagis peuvent ensuite être éliminés. Leur élimination peut être réalisée par distillation sous vide ou pression réduite, (par exemple de l'ordre de 1,013 Pa à 101 300 Pa).

Cette opération de distillation peut éventuellement être suivie d'une opération d'hydrogénation.

Selon un mode de réalisation, le milieu issu de l'opération d'hydrosilylation est soumis à une opération d'hydrogénation selon les conditions décrites ci-dessus (afin de réduire la quantité ou d'éliminer la présence de composés insaturés résultant de la réaction d'hydrosilylation), puis est éventuellement soumis à une opération d'élimination des produits autres que les composés souhaités. Cette opération d'élimination peut être réalisée par distillation sous vide ou pression réduite, par exemple de l'ordre de 1,013 Pa à 101 300 Pa.

### Solvant

La réaction d'hydrosilylation est réalisée dans un solvant solubilisant ou gonflant le greffon et le squelette.
Le solvant peut par exemple être choisi parmi les solvants suivants:
- les solvants polaires aprotiques, de préférence le DMF, le DMAc,
- les solvants polaires protiques, de préférence le méthanol, l'IPA (isopropyl alcool), le TbuOH, et
- les solvants apolaires, de préférence le toluène, l'hexane, le xylène.

Selon un mode de réalisation avantageux, le solvant est l'IPA, et les groupements sont protégés par des groupes acétyl -COCH₃ lors de l'étape a).

On donne ci-dessous des exemples de schéma réactionnels de greffage sur un composé squelette, d'un composé greffon comprenant du cellobiose, protégé par le TMS.

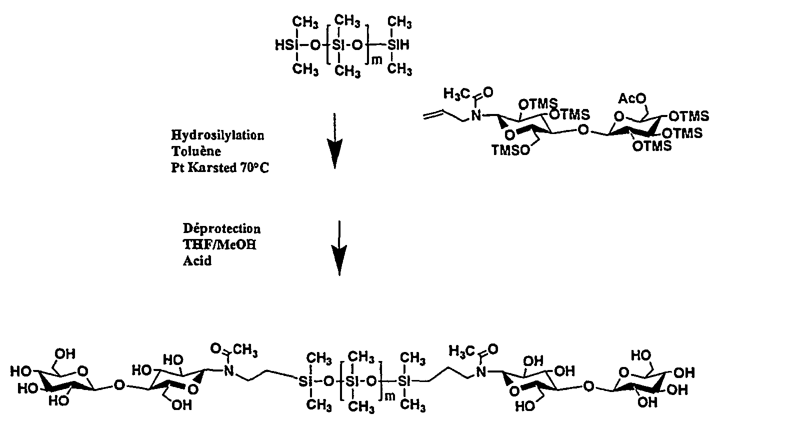

Selon le premier mode de réalisation, comme mentionné ci-dessus, l'étape b) peut être une simple réaction de greffage du composé greffon sur le composé squelette, par hydrosilylation.

Selon le deuxième mode de réalisation, on peut mettre en oeuvre une réaction d'hydrosilylation de type de celle mentionnée ci-dessus, puis mettre un oeuvre une redistribution. Ce procédé consiste à préparer dans un premier temps un oligomère polyorganosiloxane à groupements glycoside par hydrosilylation selon la voie décrite plus haut et à réaliser ensuite une redistribution. La redistribution permet ainsi d'ajuster la longueur des chaînes. Elle peut être réalisée par réaction de polyorganosiloxane à groupements glycoside avec de l'octamethylcyclotétrasiloxane (D4) en présence d'un catalyseur acide, par exemple le Tonsil (Terre de diatomée). La réaction est menée en présence ou non de solvant, de préférence à une température comprise entre 50 et 100°C. Avantageusement, on utilise à titre de composé squelette de type M'DnM' avec n compris entre 0 et 20, afin d'obtenir le polyorganosiloxane à groupements glycoside.

Selon le troisième mode de réalisation, on peut effectuer un greffage sur un alcoxysilane ou dialkoxysilane par réaction d'hydrosilylation, puis à une réaction de redistribution en présence d'un polyorganosiloxane. Dans cette approche, on peut utiliser un organosilane tel quel ou préalablement hydrolysé. Il est préférable d'utiliser un dialcoxysilane du type G-L-Si(OR²)(R²) où R², identique ou différent est un groupe alkyl, de préférence un dialcoxysilane de formule G-L-Si(OC₂H₅)(CH₃). Dans un premier mode opératoire, on peut introduire le silane dans une huile silicone et la redistribution est mené en température (70-110°C) en présence d'un catalyseur de redistribution comme le silanolate de potassium. Ce catalyseur est avantageusement neutralisé en fin de réaction. De même, il est parfois nécessaire d'éliminer les cycliques formés au cours de la réaction de redistribution. Les extrémités de chaîne sont de type alkoxy ou méthyle. Dans un second type de mode opératoire, on réalise l'hydrolyse du silane en présence d'eau et on élimine l'alcool. La redistribution est ensuite conduite en température en présence d'un catalyseur basique.

### Déprotection éventuelle

Si le composé greffon utilisé pour la réaction comprend des groupes -OP, c'est à dire des groupes -OH protégés, le procédé peut comprendre une étape de déprotection. Une telle étape consiste a effectué une réaction transformant les groupes
-OP en groupes
-OH.

Par exemple une déprotection de groupes trimethylsilyl (TMS, -Si(CH₃)₃), peut être effectuée en faisant réagir le polymère greffé à température ambiante à l'aide d'un traitement de méthanolyse en présence ou nom d'une résine acide, type amberlite.

Une déprotection de groupes acétyl, peut être effectuée en faisant réagir le polymère greffé à l'aide de l'aide d'un traitement en milieu méthanol contenant du méthylate de sodium, à température ambiante ou bien toujours en milieu méthanol en présence d'ammoniac gaz.

On détaille ci-dessous le polymère selon l'invention.

Le polymère selon l'invention, pouvant être préparé par le procédé décrit ci-dessus, présente l'une des formules mentionnées ci-dessus. Dans ces formules:
- m + n est avantageusement compris entre 0 et 1000, de préférence entre 0 et 100, le rapport entre m et n étant compris entre 1/1 et 1/100, de préférence entre 1/20 et 1/50,
   ou
- m + n + o + p est avantageusement compris entre 0 et 1000, de préférence entre 0 et 300, le rapport entre n+o et m+p étant compris entre 1/1 et 1/100, de préférence entre 1/20 et 1/50.

Le groupe L est de préférence un groupe divalent ayant l'une des formules suivantes:

-NR⁴-(CH₂)_{q}-CH₂-CH₂-,

-NR⁴-(CH₂)_{q}-CH(CH₃)-,

-NR⁴-(CH₂)_{q}-CH=CH-,

-NR⁴-(CH₂)_{q}-C(CH₃)=CH-,

dans lesquelles
- R⁴ est un atome d'hydrogène, un groupe alkyl ou un groupe protecteur, et
- q est un nombre entier supérieur ou égal à 0.

R³ est avantageusement un groupe de formule G-NH-CH₂-CH₂-CH₂-, dans laquelle G a la formule G^{a}-G^{b}-, dans laquelle G^{a} est un glycoside (mono- ou polyglycoside), et G^{b} est un glycoside de liaison lié au groupe L par un carbone anomère. G peut par exemple être du cellobiose, ou un groupe de formule G^{a}-G^{b}- dans lequel G^{a}- est un glycoside (mono- ou polyglycoside), et G^{b} est du cellobiose.

G est avantageusement un glycoside choisi parmi:
- glucose, fructose, sorbose, mannose, galactose, talose, allose, gulose, idose, glucosamine, mannoamine, galactosamine, acide glucuronique, rhamnose, arabinose , acide galacturonique, fucose, xylose, lyxose, ribose, palatinose,
- maltose, gentiobiose, lactose, cellobiose, isomaltose, melibiose, laminaribiose, chitobiose, xylobiose, mannobiose, sophorose,
- maltotriose, isomaltotriose, maltotetraose, maltopentaose, xyloglucane, maltoheptaose, mannotriose, manninotriose, maltodextrines, chitotriose,
- les amidons ayant au moins 5 équivalents dextroses, et
- les galactomannanes et leurs dérivés.

### Forme ou présentation du polymère greffé

Le polymère greffé selon l'invention peut notamment être présenté sous forme d'une huile. Il peut également être présenté sous forme dispersée ou solubilisé dans un vecteur, par exemple à une concentration de 10 à 90% en poids. Le vecteur peut avantageusement être un solvant du polymère, par exemple un composé siliconé de éventuellement volatile, par exemple un polydiméthylorganosiloxane linéaire ou cyclique tel que du cyclopentasiloxane, du disiloxane, des diméthicones linéaires, ou une trimethylsiloxyphenyl diméticone, ou un mélange.

### Utilisations

Le polymère greffé selon l'invention peut notamment être utilisé en tant qu'agent émulsifiant ou co-émulsifiant pour préparer ou stabiliser des émulsions. Il peut par exemple être utilisé dans des émulsions dont une phase est une huile silicone. Presenté sous forme d'une solution dans polyorganosiloxane, par exemple dans du cyclopentasiloxane, il peut être utilisé comme émulsifiant pour émulsions eau-dans-huile ou huile-dans-silicone. Il peut être utilisé également pour compatibiliser plusieurs composés au sein d'une formulation. Il peut également être utilisé comme agent d'aide au dépôt d'un autre composé, ou comme déclencheur du dépôt d'un autre composé. Il peut trouver une utilité pour vectoriser un composé siliconé sur une surface. Il peut également être utilisé en tant qu'agent dispersant ou co-dispersant pour préparer ou stabiliser des dispersions de particules, par exemple des pigments.

Il peut en particulier être utilisé ou compris dans une formulation cosmétique, destinée à être rincée ou non, pour le soin de la peau et/ou des cheveux et/ou des lèvres, par exemple dans des crèmes ou laits ou huiles de soin de la peau, des crèmes ou laits ou huiles de protection solaire, des shampoings, des après-shampoings, des gel-douche, des compositions de maquillage, des bâtons de rouge à lèvre, des déodorants. En particulier le polymère selon l'invention présente les avantages dans ces applications d'être peu irritants, partiellement biodégradables, de procurer un toucher agréable, et/ou de procurer un étalement intéressant.

D'autres détails ou avantages de l'invention apparaîtront plus clairement au vu de l'exemple donné ci-dessous à titre indicatif.

### Exemple

### Fonctionalisation du cellobiose:

Dans un réacteur en verre tricol de 250 ml muni d'un agitateur et d'un réfrigérant on introduit à température ambiante 3.26 g de cellobiose (9.51 mmomoles) et 15.22 g d'allylamine (266.55 mmoles). Après dissolution du cellobiose, le mélange est laissé sous agitation et sous ciel d'argon à température pendant 72 heures. L'excès d'allylamine est ensuite éliminé sous vide par chauffage à 50°C sous vide. Après élimination de la majeure partie de l'allylamine, 20 ml de toluène sont introduits afin de réaliser une co-distillation sous vide pour éliminer totalement l'allylamine. Après ce traitement, on introduit 220 ml d'un mélange méthanol/anhydride acétique (10/1 v/v) dans le réacteur et on laisse ce milieu réactionnel sous argon à température ambiant pendant 16 heures. Le milieu réactionnel est alors éventuellement filtré puis distillé sous vide à 50°C pour éliminer l'anhydride acétique. Le produit obtenu, référencé A, est un solide orangé dont l'analyse par RMN 1 H confirme la structure attendue et montre que les fonctions hydroxyles primaires sont partiellement acétylées.

Le produit est soluble dans l'eau, dans le DMSO ou bien encore dans l'alcool isopropyl (I PA).

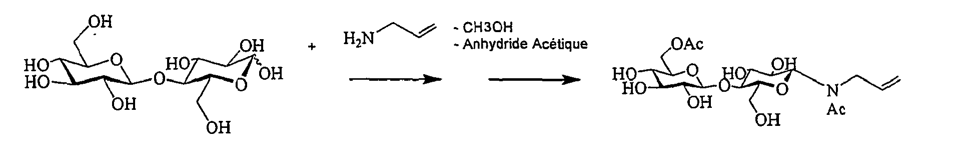

### Silylation du cellobiose à groupe allyl:

Dans un réacteur en verre, on introduit 1 g du produit A précédemment préparé, 20 ml de pyridine ne contenant pas d'eau puis 2.33 g (21.5 mmole) de triméthylchorosilane. Le milieu réactionnel est maintenue à température ambiante pendant 16 heures. Après ce temps, la pyridine est éliminée par distillation sous vide après avoir rajouté du toluène. Le produit obtenu, référencé B, est analysé par RMN. On observe bien la présence des pic des Si-CH3 vers 0 ppm et les signaux des protons allyles entre 6 et 4 ppm.

### Hydrosilylations:

### 1/ Hydrosilylation sur un produit B per-O-silylé:

1 g de N-acétyl allylcellobiose per-O-silylé (1.08 moles) sont dissous dans 20 ml de toluène dans un réacteur tricol muni d'une agitation et d'une entrée d'argon. 100 ppm de platine (par rapport aux réactifs),sous forme platine de Kartsedt sont ajoutés et le milieu est porté à 70°C sous agitation. 0.45 g d'une huile polyorganosiloxane α ω dihydrogène de masse molaire 1000 -huile 620H2- (soit 0.9 mmole de SiH) sont alors chargés dans le réacteur. La réaction est suivie par mesure de la teneur en fonction SiH. Après 4 heures de réaction, le taux de transformation est supérieur à 90%. On ajoute alors 2.3 gramme de noir de carbone dans le milieu réactionnel pour éliminer le catalyseur. Après filtration, le toluène est éliminé par distillation sous vide. Le produit obtenu (référence C) se présente sous la forme d'une huile visqueuse dont l'analyse RMN ¹H montre la disparition des signaux des protons allylique et l'apparition de signaux des groupements propyles à 0.5 et 1.5 ppm. Par RMN ²⁹Si, la disparition de groupement Si-H est confirmée.

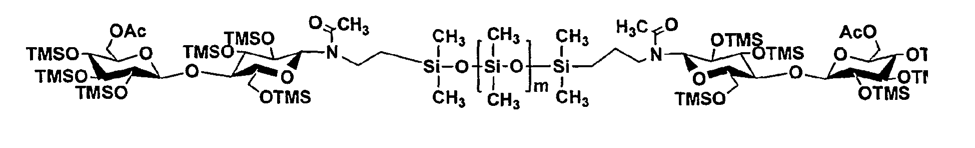

### 2/ Hydrosilylation sur produit A non protégé:

Dans un réacteur tricol de 50 ml on introduit 0.5 g de N-acétyl allylcellobiose et 1.5 ml d'alcool isopropyl. On chauffe le milieu à 70°C pour solubiliser le dérivé cellobiose puis on introduit 25 mg de catalyseur Platine ADAMS. Après introduction de 0.745 g d'huile 620H2, le milieu réactionnel est laissé 4 heures à 70°C puis traité comme précédemment.
L'analyse RMN confirme la structure attendue avec cependant la présence de liaison DOR caractéristiques des liaisons Si-O-C.

### Déprotection

La déprotection du produit C peut être réalisée à température ambiante en milieu méthanol/THF 50/50 en présence d'une résine acide type Amberlist.

## Revendications

1. Polymère greffé, ayant l'une des formules suivantes: 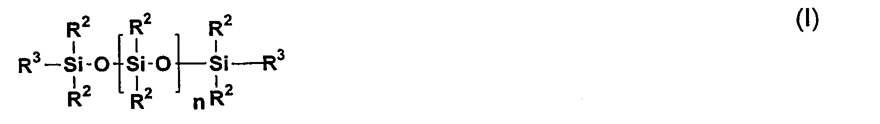 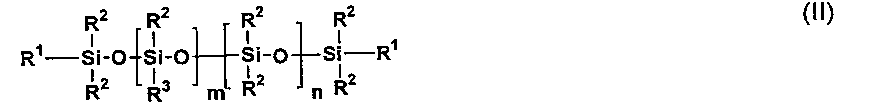 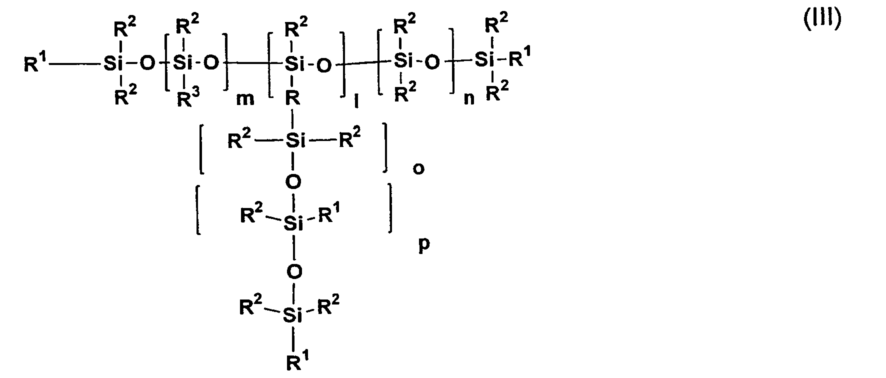 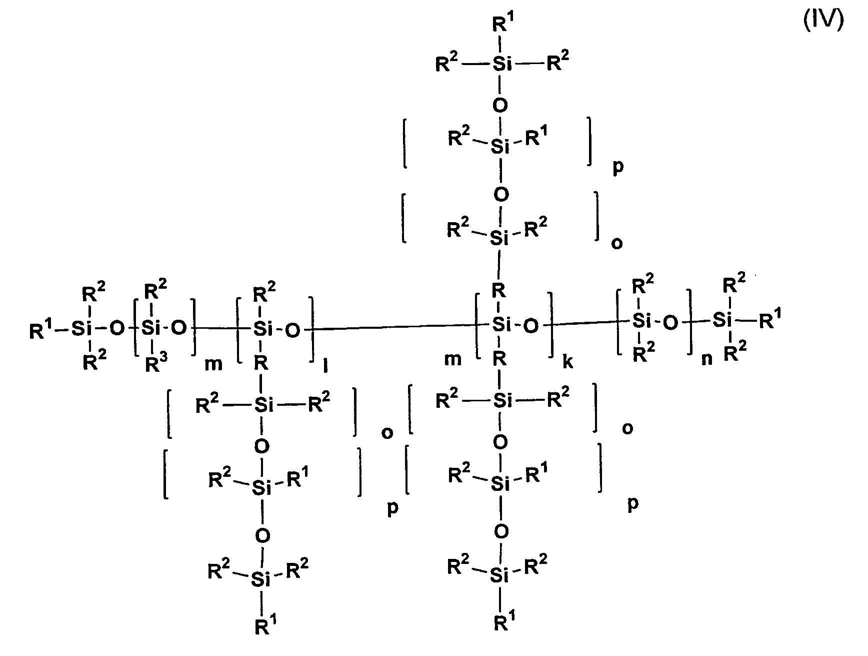 dans lesquelles:
- R², identique ou différent, est un groupe hydrogénocarboné, de préférence un groupe méthyle,
- R³, identique ou différent, est un groupe de formule -L-G dans laquelle:
- L est un groupe de liaison divalent comprenant un atome d'azote,
- G est un glycoside comprenant des groupes -OH,
- R¹, identique ou différent, est un groupe R² ou R³,
- R est un groupe divalent comprenant un atome d'oxygène, de préférence un groupe -O-,
- n est un nombre moyen différent de 0,
- m est un nombre moyen supérieur ou égal à 0,
- k et l sont des nombres moyens supérieurs ou égaux à 0, et
- o et p, identiques ou différents, sont des nombres moyens supérieurs ou égaux à 0.

2. Polymère selon la revendication 1, **caractérisé en ce que**:
- m + n est compris entre 0 et 1000, de préférence entre 0 et 100, le rapport entre m et n étant compris entre 1/1 et 1/100, de préférence entre 1/20 et 1/50, ou
- m + n + o + p est compris entre 0 et 1000, de préférence entre 0 et 300, le rapport entre n+o et m+p étant compris entre 1/1 et 1/100, de préférence entre 1/20 et 1/50.

3. Polymère selon l'une des revendications précédentes, **caractérisé en ce que** L est un groupe divalent ayant l'une des formules suivantes:
-NR⁴-(CH₂)q CH₂-CH₂-,
-NR⁴-(CH₂)_{q}-CH(CH₃)-,
-NR⁴-(CH₂)_{q}-CH=CH-, ou
-NR⁴-(CH₂)_{q}-C(CH₃)=CH-,
dans lesquelles
- R⁴ est un atome d'hydrogène, un groupe alkyl ou un groupe protecteur, et
- q est un nombre entier supérieur ou égal à 0.

4. Polymère selon l'une des revendications précédentes **caractérisé en ce que** R³ est un groupe de formule G-NH-CH₂-CH₂-CH₂-, dans laquelle G a la formule G^{a}-G^{b}-, dans laquelle G^{a} est un glycoside, et G^{b} est un glycoside de liaison lié au groupe L par un carbone anomère.

5. Polymère selon l'une des revendications précédentes, **caractérisé en ce que** -G est un glycoside choisi parmi:
- glucose, fructose, sorbose, mannose, galactose, talose, allose, gulose, idose, glucosamine, mannoamine, galactosamine, acide glucuronique, rhamnose, arabinose, acide galacturonique, fucose, xylose, lyxose, ribose, palatinose,
- maltose, gentiobiose, lactose, cellobiose, isomaltose, melibiose, laminaribiose, chitobiose, xylobiose, mannobiose, sophorose,
- maltotriose, isomaltotriose, maltotetraose, maltopentaose, xyloglucane, maltoheptaose, mannotriose, manninotriose, maltodextrines, chitotriose,
- les amidons ayant au moins 5 équivalents dextroses, et
- les galactomannanes et leurs dérivés.

6. Procédé de préparation d'un polymère greffé décrit dans l'une des revendications précédentes, **caractérisé en ce qu'**il comprend les étapes suivantes:
a) préparer un composé greffon de formule L'-G', dans laquelle:
- L' est un groupe comprenant un groupe ethylèniquement insaturé, et comprenant un atome d'azote, et
- G' est un glycoside comprenant des groupes -OH éventuellement protégés,
b) greffer le composé greffon par un procédé comprenant une étape d'hydrosilylation, ledit procédé comprenant:
- une hydrosilylation du composé greffon avec un composé squelette présentant l'une des formules suivantes: 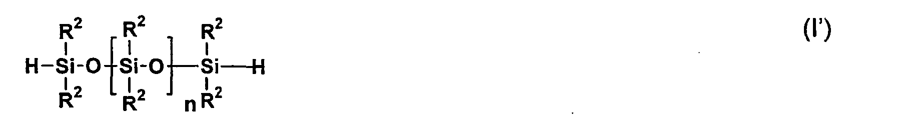 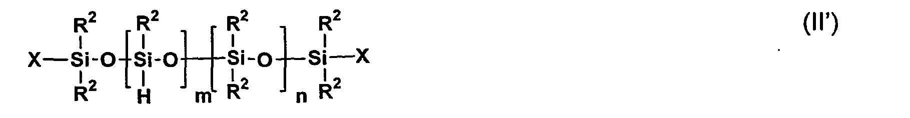 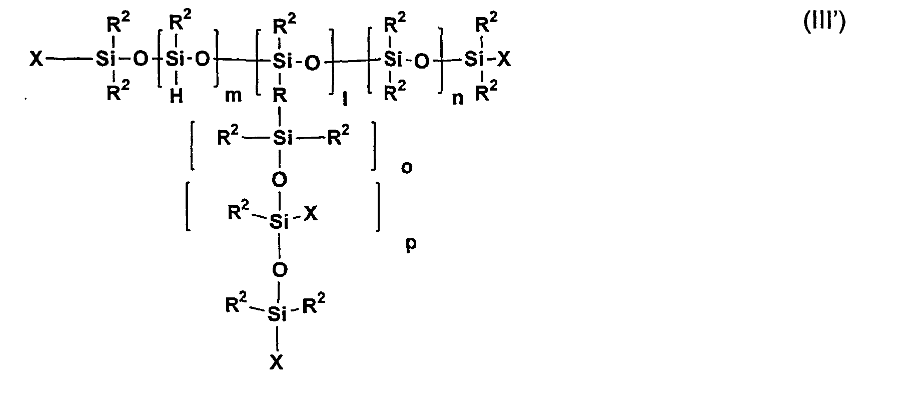 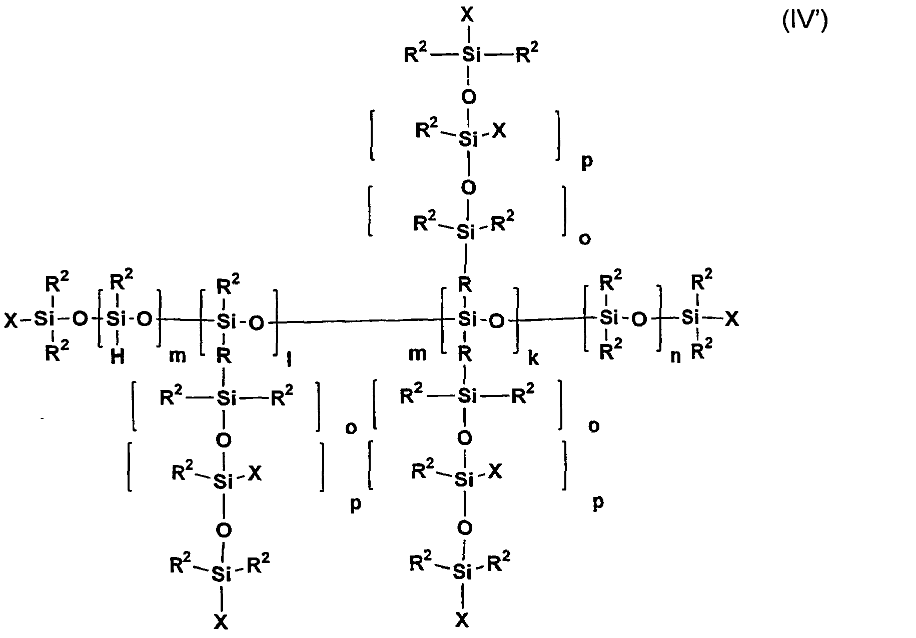 dans lesquelles:
- R², identique ou différent, est un groupe hydrogénocarboné, de préférence un groupe méthyle,
- X, identique ou différent, est un atome d'hydrogène ou un R²,
- R est un groupe divalent comprenant un atome d'oxygène, de préférence un groupe -O-,
- n est un nombre moyen différent de 0,
- m est un nombre moyen supérieur ou égal à 0,
- k et l sont des nombres moyens supérieurs ou égaux à 0, et
- o et p, identiques ou différents, sont des nombres moyens supérieurs ou égaux à 0,
la réaction étant réalisée dans un solvant solubilisant ou gonflant le greffon et le squelette,
puis éventuellement une redistribution, ou
- une hydrosilylation du composé greffon avec un silane squelette présentant la formule H-Si(OR⁵)₃₋ₐR⁵a, dans laquelle R⁵, identique ou différent, est un groupe hydrogénocarboné, et a est égal à 1 ou 2, le silane squelette présentant de préférence la formule H-Si(-O-CH₂-CH₃)₂CH₃, la réaction étant réalisée dans un solvant solubilisant
ou gonflant le greffon et le squelette, puis une redistribution en présence d'un polyorganosiloxane,
c) éventuellement déprotéger les groupes -OH.

7. Procédé selon la revendication 6, **caractérisé en ce que** le solvant est choisi parmi:
- les solvants polaires aprotiques, de préférence le DMF, le DMAc,
- les solvants polaires protiques, de préférence le méthanol, l'lPA, le TbuOH, et - les solvants apolaires, de préférence le toluène, l'hexane, le xylène.

8. Procédé selon la revendication 6 ou 7, **caractérisé en ce que** le groupe L' l'une des formules suivantes:
-NR⁴-(CH₂)_{q'}-CH=CH₂, ou
-NR⁴-(CH₂)_{q'}-C≡CH,
dans lesquelles:
- R⁴ est un atome d'hydrogène, ou un groupe acétyl -COCH₃, et
- q' est un nombre entier supérieur ou égal à 0.

9. Procédé selon l'une des revendications 6 à 8, **caractérisé en ce que** le composé greffon a la formule G'-N(COCH₃)-CH₂-CH=CH₂, dans laquelle G' a la formule G^{a}-G^{b}-dans laquelle G^{a} est un glycoside et G^{b} est un glycoside lié à l'atome N par un carbone anomère, lesdits glycosides étant éventuellement protégés.

10. Procédé selon l'une des revendications 6 à 9, **caractérisé en ce que** le composé greffon à la formule suivante:
G'-N(COCH₃)-CH₂-CH=CH₂,
l'étape a) comprenant les étapes suivantes:
a1) réaction du carbone anomère d'un glycoside G" comprenant des groupes -OH libres avec de l'allylamine en excès,
a2) élimination de l'allylamine en excès
a3) réaction avec de l'anhydride acétique, de manière à protéger l'atome d'azote, et des -OH primaires du glycoside, et
a4) éventuellement protection des autres groupes -OH du glycoside.

11. Procédé selon la revendication 10, **caractérisé en ce que** les groupes -OH libres sont protégés par un groupe acétyl -COCH₃ lors de l'étape a), et **en ce que** le solvant de l'étape b) est l'IPA.

12. Procédé selon la revendication 6 à 9, **caractérisé en ce que** le groupe G' est protégé par des groupes triméthylsilyl.

13. Procédé selon l'une des revendications 6 à 12, **caractérisé en ce que** G' est un glycoside choisi parmi:
- glucose, fructose, sorbose, mannose, galactose, talose, allose, gulose, idose, glucosamine, mannoamine, galactosamine, acide glucuronique, rhamnose, arabinose , acide galacturonique, fucose, xylose, lyxose, ribose, palatinose,
- maltose, gentiobiose, lactose, cellobiose, isomaltose, melibiose, laminaribiose, chitobiose, xylobiose, mannobiose, sophorose,
- maltotriose, isomaltotriose, maltotetraose, maltopentaose, xyloglucane, maltoheptaose, mannotriose, manninotriose, maltodextrines, chitotriose,
- les amidons ayant au moins 5 équivalents dextroses,
- les galactomannanes et leurs dérivés, et
- les dérivés protégés de ces glycosides.

14. Composé de formule:
G"-N(COCH₃)-CH₂-CH=CH₂
dans laquelle G" est un glycoside lié à l'atome N par un carbone anomère, les groupes -OH du glycosides étant partiellement protégés par des groupes acétyl de formule -COCH₃.

## Claims

1. A grafted polymer having one of the following formulae: 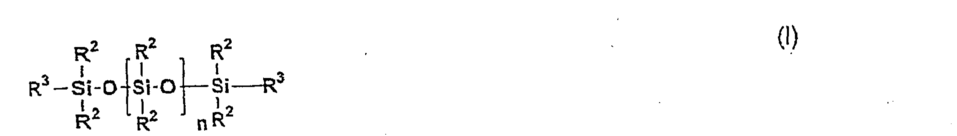 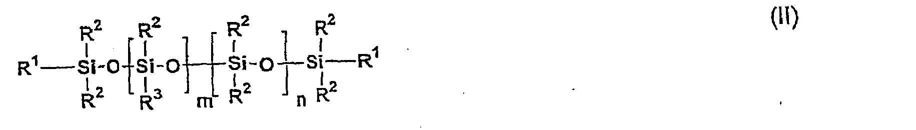 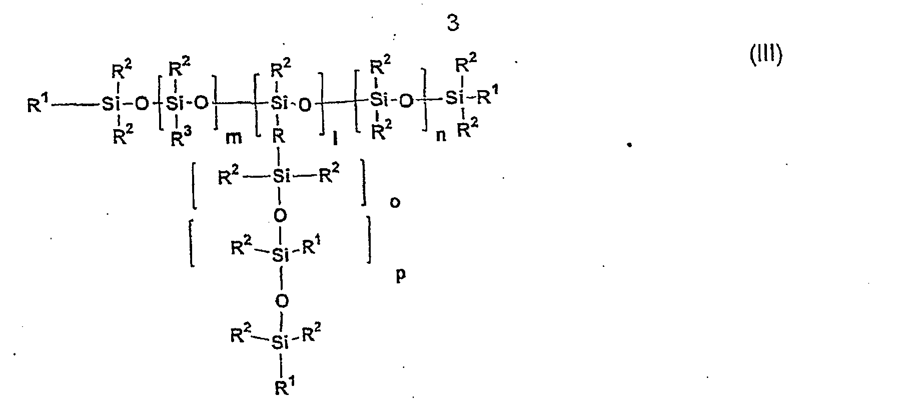 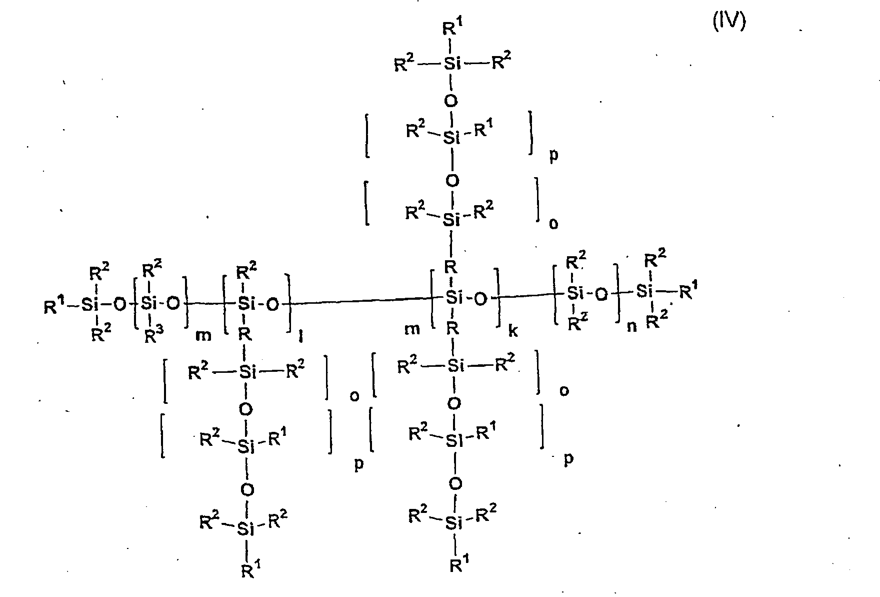 in which:
- R², which may be identical or different, is a hydrocarbon group, preferably a methyl group,
- R³, which may be identical or different, is a group of formula -L-G in which:
- L is a divalent linker group comprising a nitrogen atom,
- G is a glycoside comprising -OH groups,
- R¹, which may be identical or different, is an R² or R³ group,
- R is a divalent group comprising an oxygen atom, preferably an -O- group,
- n is an average number other than 0,
- m is an average number greater than or equal to 0,
- k and 1 are average numbers greater than or equal to 0, and
- o and p, which may be identical or different, are average numbers greater than or equal to 0.

2. The polymer as claimed in claim 1, **characterized in that**:
- m + n is between 0 and 1000, preferably between 0 and 100, the ratio of m to n being between 1/1 and 1/100, preferably between 1/20 and 1/50, or
- m + n + o + p is between 0 and 1000, preferably between 0 and 300, the ratio of n + o to m + p being between 1/1 and 1/100, preferably between 1/20 and 1/50.

3. The polymer as claimed in either of the preceding claims, **characterized in that** L is a divalent group having one of the following formulae:
-NR⁴-(CH₂)_{q}-CH₂-CH₂-,
-NR⁴-(CH₂)_{q}-CH(CH₃)-,
-NR⁴-(CH₂)_{q}-CH=CH-, or
-NR⁴-(CH₂)_{q}-C(CH₃)=CH-,
in which
- R⁴ is a hydrogen atom, an alkyl group or a protective group, and
- q is an integer greater than or equal to 0.

4. The polymer as claimed in one of the preceding claims, **characterized in that** R³ is a group of formula G-NH-CH₂-CH₂-CH₂-, in which G has the formula G^{a}-G^{b}-, in which G^{a} is a glycoside, and G^{b} is a linker glycoside connected to the L group via an anomeric carbon.

5. The polymer as claimed in one of the preceding claims, **characterized in that** -G is a glycoside chosen from:
- glucose, fructose, sorbose, mannose, galactose, talose, allose, gulose, idose, glucosamine, mannoamine, galactosamine, glucuronic acid, rhamnose, arabinose, galacturonic acid, fucose, xylose, lyxose, ribose, palatinose,
- maltose, gentiobiose, lactose, cellobiose, isomaltose, melibiose, laminaribiose, chitobiose, xylobiose, mannobiose, sophorose,
- maltotriose, isomaltotriose, maltotetraose, maltopentaose, xyloglucan, maltoheptaose, mannotriose, manninotriose, maltodextrins, chitotriose,
- starches having at least 5 dextrose equivalents, and
- galactomannans and derivatives thereof.

6. A method for preparing a grafted polymer described in one of the preceding claims, **characterized in that** it comprises the following steps:
a) preparing a graft compound of formula L'-G', in which:
- L' is a group comprising a group that is ethylenically unsaturated, and comprising a nitrogen atom, and
- G' is a glycoside comprising optionally protected
- OH groups,
b) grafting the graft compound by means of a method comprising a hydrosilylation step, said method comprising:
- hydrosilylation of the graft compound with a backbone compound having one of the following formulae: 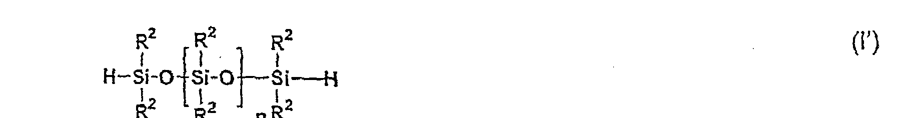 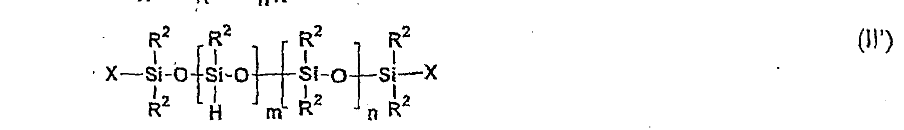 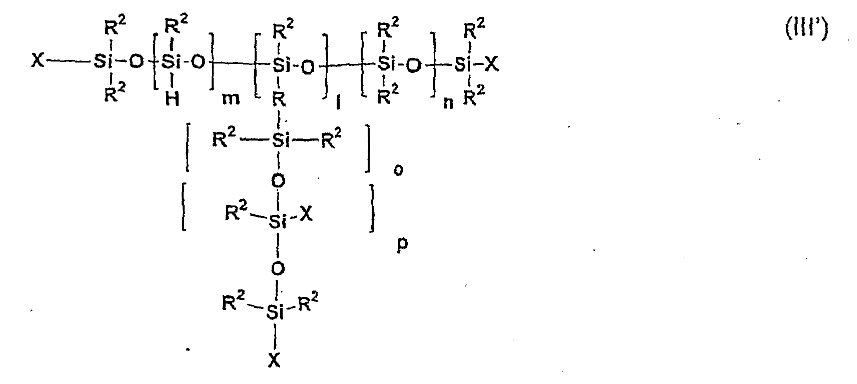 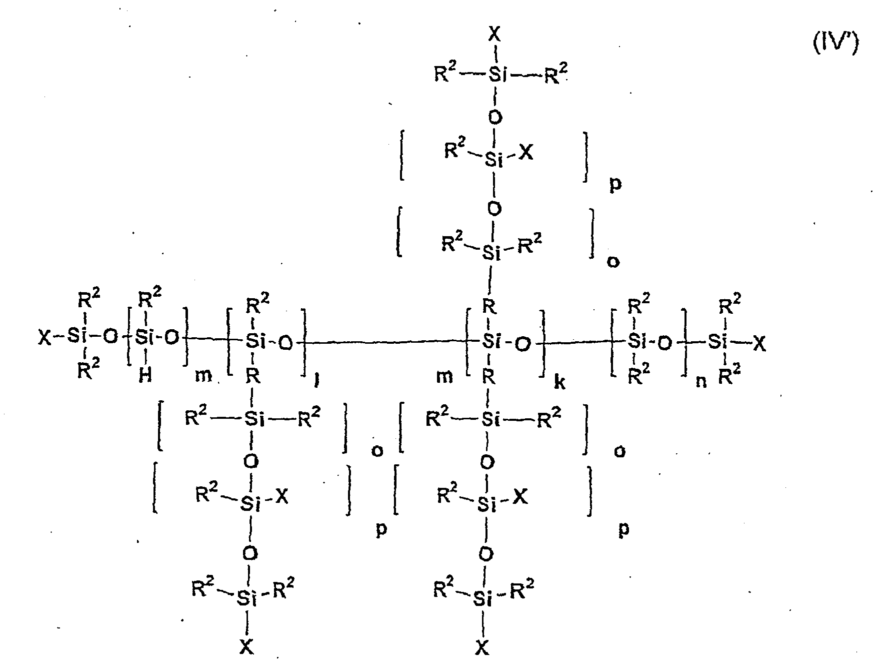 in which:
- R², which may be identical or different, is a hydrocarbon group, preferably a methyl group,
- X, which may be identical or different, is a hydrogen atom or an R²
- R is a divalent group comprising an oxygen atom, preferably an -O- group,
- n is an average number other than 0,
- m is an average number greater than or equal to 0,
- k and 1 are average numbers greater than or equal to 0, and
- o and p, which may be identical or different, are average numbers greater than or equal to 0,
the reaction being carried out in a solvent which solubilizes or swells the graft and the backbone,
then, optionally, a redistribution, or
- hydrosilylation of the graft compound with a backbone silane having the formula H-Si(OR⁵)₃₋ₐR⁵ ₐ, in which R⁵ which may be identical or different, is a hydrocarbon group, and a is equal to 1 or 2, the backbone silane preferably having the formula H-Si(-O-CH₂-CH₃)₂CH₃, the reaction being carried out in a solvent which solubilizes or swells the graft and the backbone, and then a redistribution in the presence of polyorganosiloxane,
c) optionally, deprotecting -OH groups.

7. The method as claimed in claim 6, **characterized in that** the solvent is chosen from:
- aprotic polar solvents, preferably DMF, DMAc,
- protic polar solvents, preferably methanol, IPA, TbuOH, and
- apolar solvents, preferably toluene, hexane, xylene.

8. The method as claimed in claim 6 or 7, **characterized in that** the L' group has one of the following formulae:
-NR⁴-(CH₂)_{q'}-CH=CH₂, or
-NR⁴-(CH₂)_{q'}-C≡CH₂,
in which:
- R⁴ is a hydrogen atom or an acetyl group -COCH₃, and
- q' is an integer greater than or equal to 0.

9. The method as claimed in one of claims 6 to 8, **characterized in that** the graft compound has the formula. G'-N(COCH₃)-CH₂-CH=CH₂, in which G' has the formula G^{a}-G^{b}- in which G^{a} is glycoside and G^{b} is a glycoside connected to the N atom by an anomeric carbon, said glycosides being optionally protected.

10. The method as claimed in one of claims 6 to 9, **characterized in that** the graft compound has the following formula:
G'-N(COCH₃)-CH₂-CH=CH₂,
step a) comprising the following steps:
a1) reaction of the anomeric carbon of a glycoside G" comprising free -OH groups with excess allylamine,
a2) elimination of the excess allylamine,
a3) reaction with acetic anhydride, so as to protect the nitrogen atom, and primary -OH groups of the glycoside, and
a4) optionally, protection of the other -OH groups of the glycoside.

11. The method as claimed in claim 10, **characterized in that** the free -OH groups are protected with an acetyl group -COCH₃ in step a), and **in that** the solvent in step b) is IPA.

12. The method as claimed in claims 6 to 9, **characterized in that** the G' group is protected with trimethylsilyl groups.

13. The method as claimed in one of claims 6 to 12, **characterized in that** G' is a glycoside chosen from:
- glucose, fructose, sorbose, mannose, galactose, talose, allose, gulose, idose, glucosamine, mannoamine, galactosamine, glucuronic acid, rhamnose, arabinose, galacturonic acid, fucose, xylose, lyxose, ribose, palatinose,
- maltose, gentiobiose, lactose, cellobiose, isomaltose, melibiose, laminaribiose, chitobiose, xylobiose, mannobiose, sophorose,
- maltotriose, isomaltotriose, maltotetraose, maltopentaose, xyloglucan, maltoheptaose, mannotriose, manninotriose, maltodextrins, chitotriose,
- starches having at least 5 dextrose equivalents,
- galactomannans and derivatives thereof, and
- protected derivatives of these glycosides.

14. A compound of formula:
G"-N(COCH₃)-CH₂-CH=CH₂
in which G" is a glycoside connected to the N atom via an anomeric carbon, the -OH groups of the glycosides being partially protected with acetyl groups of formula -COCH₃.

## Patentansprüche

1. Pfropfpolymer, welches eine der folgenden Formeln aufweist: 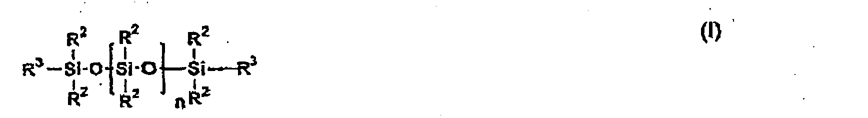 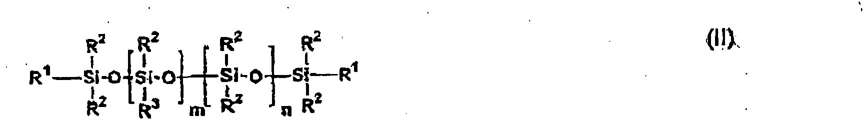 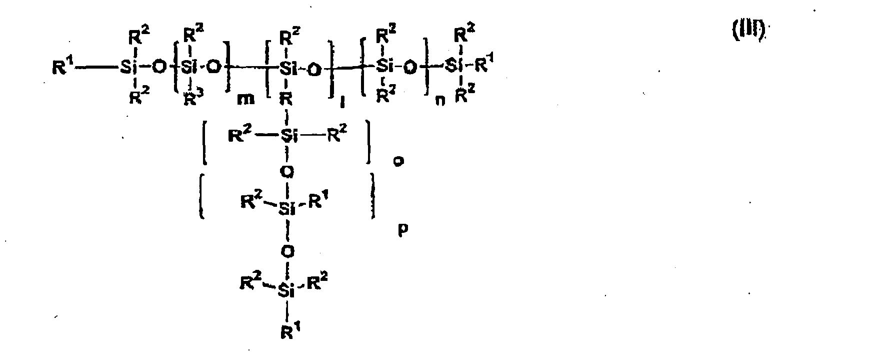 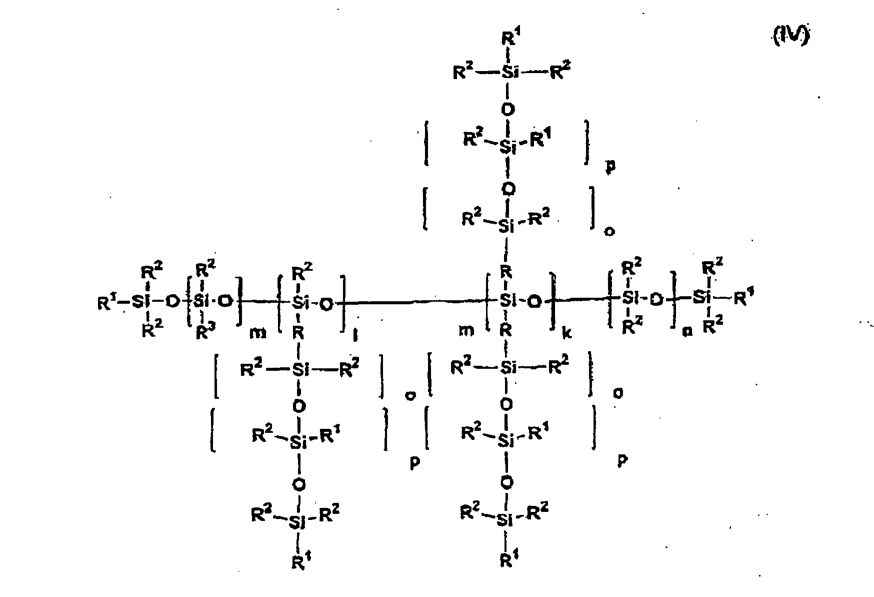 in welchen:
- R², identisch oder verschieden, eine Kohlenwasserstoffgruppe ist, vorzugsweise eine Methylgruppe,
- R³, identisch oder verschieden, eine Gruppe der Formel -L-G ist, in welcher:
- L eine bivalente Bindungsgruppe mit einem Stickstoffatom ist,
- G ein Glycosid mit -OH-Gruppen ist,
- R¹, identisch oder verschieden, eine Gruppe R² oder R³ ist,
- R eine bivalente Gruppe mit einem Sauerstoffatom, vorzugsweise einer Gruppe -O-, ist,
- n eine durchschnittliche Zahl unterschiedlich zu 0 ist,
- m eine durchschnittliche Zahl größer oder gleich 0 ist,
- k und 1 durchschnittliche Zahlen größer oder gleich 0 sind, und
- o und p, identisch oder verschieden, durchschnittliche Zahlen größer oder gleich 0 sind.

2. Polymer gemäß Anspruch 1, **dadurch gekennzeichnet, dass**:
- m + n zwischen 0 und 1000 liegt, vorzugsweise zwischen 0 und 100, wobei das Verhältnis zwischen m und n zwischen 1/1 und 1/100, vorzugsweise zwischen 1/20 und 1/50, liegt, oder
- m + n + o + p zwischen 0 und 1000 liegt, vorzugsweise zwischen 0 und 300, wobei das Verhältnis zwischen n+o und m+p zwischen 1/1 und 1/100, vorzugsweise zwischen 1/20 und 1/50, liegt.

3. Polymer gemäß einem der vorausgegangenen Ansprüche, **dadurch gekennzeichnet, dass** L eine bivalente Gruppe ist, welche eine der folgenden Formeln aufweist:
-NR⁴-(CH₂)_{q}-CH₂-CH₂-,
-NR⁴-(CH₂)_{q}-CH(CH₃)-,
-NR⁴-(CH₂)_{q}-CH=CH-, oder
-NR⁴-(CH₂)_{q}-C(CH₃)=CH-,
in welchen
- R⁴ ein Wasserstoffatom, eine Alkylgruppe oder eine Schutzgruppe ist und
- q eine ganze Zahl größer oder gleich 0 ist.

4. Polymer gemäß einem der vorausgegangenen Ansprüche, **dadurch gekennzeichnet, dass** R³ eine Gruppe der Formel G-NH-CH₂-CH₂-CH₂- ist, in welcher G die Formel G^{a}-G^{b} hat, in der G^{a} ein Glycosid ist und G^{b} ein Bindungsglycosid ist, das durch ein Kohlenstoffanomer an eine Gruppe L gebunden ist.

5. Polymer gemäß einem der vorausgegangenen Ansprüche, **dadurch gekennzeichnet, dass** -G ein Glycosid ist gewählt aus:
- Glucose, Fructose, Sorbose, Mannose, Galactose, Talose, Allose, Gulose, Idose, Glucosamin, Mannoamin, Galactosamin, Glucuronsäure, Rhamnose, Arabinose, Galacturonsäure, Fucose, Xylose, Lyxose, Ribose, Palatinose,
- Maltose, Gentiobiose, Lactose, Cellobiose, Isomaltose, Melibiose, Laminaribiose, Chitobiose, Xylobiose, Mannobiose, Sophorose,
- Maltotriose, Isomaltotriose, Maltotetraose, Maltopentaose, Xyloglucan, Maltoheptaose, Mannotriose, Manninotriose, Maltodextrine, Chitotriose,
- Stärken mit wenigstens 5 Dextroseäquivalenten und
- Galactomannanen und deren Derivaten.

6. Verfahren zur Herstellung eines gepfropften Polymers wie in einem der vorausgegangenen Ansprüche beschrieben, **dadurch gekennzeichnet, dass** es die folgenden Schritte aufweist:
a) Herstellen einer Pfropfverbindung der Formel L'-G', in welcher:
- L' eine Gruppe ist, welche eine ethylenisch ungesättigte Gruppe aufweist und ein Stickstoffatom umfasst, und
- G' ein Glycosid ist, welches -OH-Gruppen, gegebenenfalls geschützt, aufweist,
b) Pfropfen der Pfropfverbindung mittels eines Verfahrens, das einen Schritt der Hydrosilylierung umfasst, wobei das Verfahren aufweist:
- eine Hydrosilylierung der Pfropfverbindung mit einer Skelettverbindung, welche eine der folgenden Formeln aufweist: 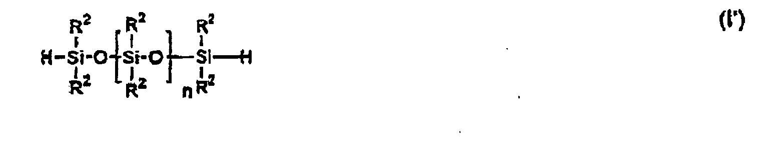 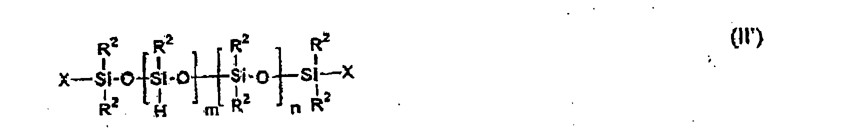 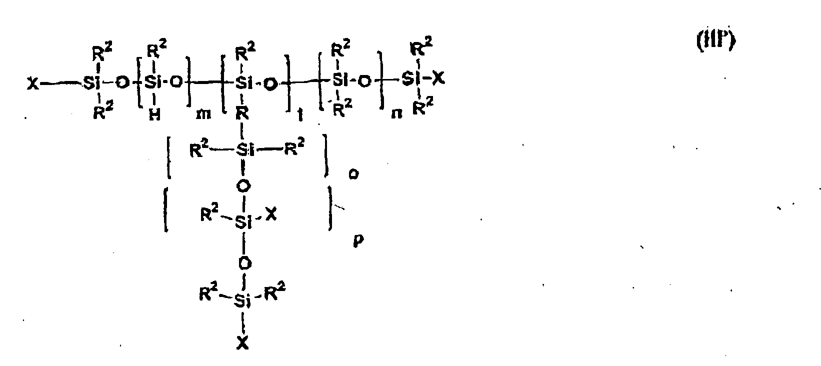 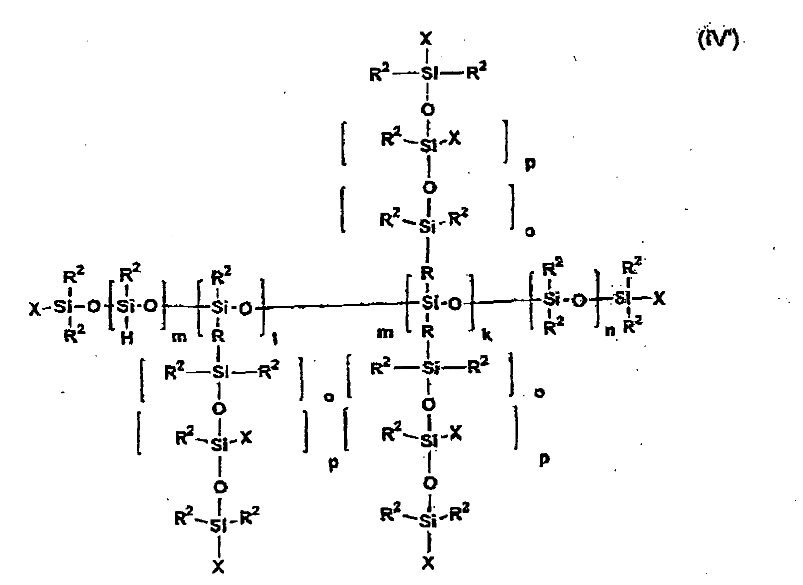 in welchen:
- R², identisch oder verschieden, eine Kohlenwasserstoffgruppe ist, vorzugsweise eine Methylgruppe,
- X, identisch oder verschieden, ein Wasserstoffatom oder ein R² ist,
- R eine bivalente Gruppe mit einem Sauerstoffatom, vorzugsweise einer Gruppe -O-, ist,
- n eine durchschnittliche Zahl unterschiedlich zu 0 ist,
- m eine durchschnittliche Zahl größer oder gleich 0 ist,
- k und I durchschnittliche Zahlen größer oder gleich 0 sind, und
- o und p, identisch oder verschieden, durchschnittliche Zahlen größer oder gleich 0 sind,
wobei die Reaktion in einem Lösungsmittel durchgeführt wird, welches den Pfropf und das Skelett auflöst oder aufquellt,
dann gegebenenfalls eine Umverteilung, oder
- eine Hydrosilylierung der Pfropfverbindung mit einem Skelettsilan, welches die Formel H-Si(OR⁵)₃₋ₐR⁵ ₐ aufweist, in welcher R⁵, identisch oder verschieden, eine Kohlenwasserstoffgruppe ist und a gleich 1 oder 2 ist, wobei das Silanskelett vorzugsweise die Formel H-Si(-O-CH₂-CH₃)₂CH₃ aufweist, wobei die Reaktion in einem Lösungsmittel durchgeführt wird, welches den Pfropf und das Skelett auflöst oder aufquellt, dann eine Umverteilung in Gegenwart eines Polyorganosiloxans,
c) gegebenenfalls Entschützen der -OH-Gruppen.

7. Verfahren gemäß Anspruch 6, **dadurch gekennzeichnet, dass** das Lösungsmittel gewählt wird aus:
- den aprotischen polaren Lösungsmitteln, vorzugsweise DMF, cDMA
- den protischen polaren Lösungsmitteln, vorzugsweise Methanol, IPA, TbuOH, und
- den apolaren Lösungsmitteln, vorzugsweise Toluol, Hexan, Xylol.

8. Verfahren gemäß Anspruch 6 oder 7, **dadurch gekennzeichnet, dass** die Gruppe L' eine der folgenden Formeln aufweist:
-NR⁴-(CH₂)_{q'}-CH=CH₂, oder
-NR⁴-(CH₂)_{q'}-C≡CH,
in welchen:
- R⁴ ein Wasserstoffatom oder eine Acetylgruppe -COCH₃ ist, und
- q' eine ganze Zahl größer oder gleich 0 ist.

9. Verfahren gemäß einem der Ansprüche 6 bis 8, **dadurch gekennzeichnet, dass** die Pfropfverbindung die Formel G'-N(COCH₃)-CH₂-CH=CH₂ aufweist, in welcher G' die Formel G^{a}-G^{b} hat, in der G^{a} ein Glycosid ist und G^{b} ein Glycosid ist, das durch ein Kohlenstoffanomer an ein N-Atom gebunden ist, wobei die Glycoside gegebenenfalls geschützt sind.

10. Verfahren gemäß einem der Ansprüche 6 bis 9, **dadurch gekennzeichnet, dass** die Pfropfverbindung die folgende Formel aufweist:
G'-N(COCH₃)-CH₂-CH=CH₂,
wobei der Schritt a) die folgenden Schritte aufweist:
a1) Reaktion des Kohlenstoffanomers eines Glycosids G", welches freie -OH-Gruppen aufweist, mit einem Allylamin im Überschuss,
a2) Entfernen des überschüssigen Allylamins,
a3) Reaktion mit Essigsäureanhydrid, um das Stickstoffatom zu schützen, und primären -OH des Glycosids, und
a4) gegebenenfalls Schützen der anderen -OH-Gruppen des Glycosids.

11. Verfahren gemäß Anspruch 10, **dadurch gekennzeichnet, dass** die freien -OH-Gruppen bei dem Schritt a) durch eine Acetylgruppe -COCH₃ geschützt sind, und dadurch, dass das Lösungsmittel bei Schritt b) IPA ist.

12. Verfahren gemäß Anspruch 6 bis 9, **dadurch gekennzeichnet, dass** die Gruppe G' durch Trimethylsilylgruppen geschützt ist.

13. Verfahren gemäß einem der Ansprüche 6 bis 12, **dadurch gekennzeichnet, dass** G' ein Glycosid ist gewählt aus:
- Glucose, Fructose, Sorbose, Mannose, Galactose, Talose, Allose, Gulose, Idose, Glucosamin, Mannoamin, Galactosamin, Glucuronsäure, Rhamnose, Arabinose, Galacturonsäure, Fucose, Xylose, Lyxose, Ribose, Palatinose,
- Maltose, Gentiobiose, Lactose, Cellobiose, Isomaltose, Melibiose, Laminaribiose, Chitobiose, Xylobiose, Mannobiose, Sophorose,
- Maltotriose, Isomaltotriose, Maltotetraose, Maltopentaose, Xyloglucan, Maltoheptaose, Mannotriose, Manninotriose, Maltodextrine, Chitotriose,
- Stärken mit wenigstens 5 Dextroseäquivalenten,
- Galactomannanen und deren Derivaten und
- den geschützten Derivaten dieser Glycoside.

14. Verbindung der Formel:
G"-N(COCH₃)-CH₂-CH=CH₂,
in welcher G" ein Glycosid ist, das mittels eines Kohlenstoffanomers an das N-Atom gebunden ist, wobei die -OH-Gruppen teilweise durch Acetylgruppen der Formel -COCH₃ geschützt sind.
